(19) Europäisches Patentamt
European Patent Office
Office européen des brevets

(11) EP 1 448 608 B1

(12) EUROPÄISCHE PATENTSCHRIFT

(45) Veröffentlichungstag und Bekanntmachung des Hinweises auf die Patenterteilung:
**30.08.2006 Patentblatt 2006/35**

(21) Anmeldenummer: **02774747.6**

(22) Anmeldetag: **23.10.2002**

(51) Int Cl.:
*C08B 37/12* (2006.01) *A23L 1/0532* (2006.01)

(86) Internationale Anmeldenummer:
**PCT/EP2002/011863**

(87) Internationale Veröffentlichungsnummer:
**WO 2003/035701 (01.05.2003 Gazette 2003/18)**

(54) **CARRAGEENAN ENTHALTENDE ZUSAMMENSETZUNG MIT VERBESSERTEN GELBILDENDEN EIGENSCHAFTEN**

CARRAGEENAN-CONTAINING COMPOSITION WITH IMPROVED GELLING PROPERTIES

COMPOSITION CONTENANT DU CARRAGHENANE, PRESENTANT DES PROPRIETES DE GELIFICATION AMELIOREES

(84) Benannte Vertragsstaaten:
**AT BE BG CH CY CZ DE DK EE ES FI FR GB GR IE IT LI LU MC NL PT SE SK TR**

(30) Priorität: **23.10.2001 DE 10152140**

(43) Veröffentlichungstag der Anmeldung:
**25.08.2004 Patentblatt 2004/35**

(73) Patentinhaber: **SATIA GMBH**
**85354 Freising (DE)**

(72) Erfinder:
- **XIA, Huilin**
  **70197 Stuttgart (DE)**
- **FRITZ, Hans-Gerhard**
  **73066 Uhingen (DE)**
- **BORN, Karin**
  **65189 Wiesbaden (DE)**
- **Skorupinski, Fabienne**
  **F-50500 Carentan (FR)**

(74) Vertreter: **HOFFMANN EITLE**
**Patent- und Rechtsanwälte**
**Arabellastrasse 4**
**81925 München (DE)**

(56) Entgegenhaltungen:
**WO-A-02/48199**
**WO-A-94/22921**
**CH-A- 534 522**
**DE-A- 2 511 191**
**DE-A- 2 612 342**

- **DATABASE WPI Week 198017 Derwent Publications Ltd., London, GB; AN 1980-30457C XP002196719 & JP 48 091256 A (MEIJI SEIKA KAISHA), 28. November 1973 (1973-11-28)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 448 608 B1

**Beschreibung**

Gegenstand der vorliegenden Erfindung ist ein Verfahren zur Herstellung einer Carrageenan enthaltenden Zusammensetzung mit verbesserten gelbildenden Eigenschaften.

Bei Carrageenanen handelt es sich um Polysaccharide aus Galactose-Einheiten mit unterschiedlichen Sulfatierungsgraden zwischen 15 und 40 %. Als typische marine Hydrokolloide werden sie üblicherweise aus Rotalgen gewonnen und als Gelier- oder Verdickungsmittel mit thermoreversiblen Eigenschaften hauptsächlich in.der Nahrungsmittelindustrie eingesetzt.

Schon vor mehr als 600 Jahren wurde das so genannte "Irisch Moos" in Carraghen an der südirischen Küste für medizinische Zwecke und im Bereich der Ernährung eingesetzt. Dabei war "Irisch Moos" insbesondere für seine einzigartige Eigenschaft bekannt, Milch zu verdicken. Entsprechend wurde es auch in den küstennahen Bereichen der Normandie und der Bretagne verwendet. So wurden bspw. Kuchen mit gebleichten Flechten oder sog. "goémon blanc" hergestellt, indem Algen einfach in Milch gekocht wurden.

Ab ca. Mitte des 20. Jahrhunderts wurden derartige Extrakte industriell hergestellt. Erfolgte dies ursprünglich aus "Irisch Moos", so werden Carrageenane heutzutage aus zahlreichen Rotalgen gewonnen.

Im allgemeinen lassen sich zwei Arten von Carrageenanen unterscheiden: Die traditionell aufgereinigten Extrakte und die halbaufgereinigten Carrageenane (Processed Eucheuma Seaweed, P.E.S.), die erst in jüngerer Zeit in den Nahrungsmittelbereich Eingang gefunden haben. Entsprechend den eingeschränkten Eigenschaften von P.E.S. beziehen sich die nachfolgenden Angaben ausschließlich auf die traditionell aufgereinigten Carrageenan-Extrakte.

Die sehr umfangreiche Carrageenan-Familie ist sehr breit gefächert und kann ganz allgemein in drei "ideale" Hauptgruppen eingeteilt werden, nämlich die Iota-, Kappa- und Lambda-Carrageenane, wobei die gelbildenden Carrageenane ausschließlich durch Iota- und Kappa-Carrageenane repräsentiert werden.

Bei diesen Carrageenan-Spezies handelt es sich um lineare Polymere, bestehend aus zwei sich wiederholenden Carrabiose-Einheiten:

κ-Carrageenan

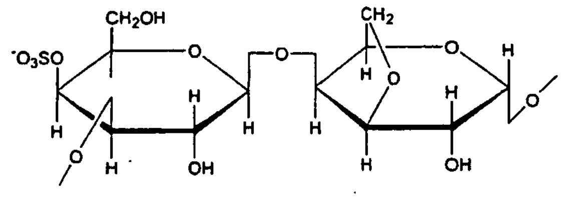

ι-Carrageenan

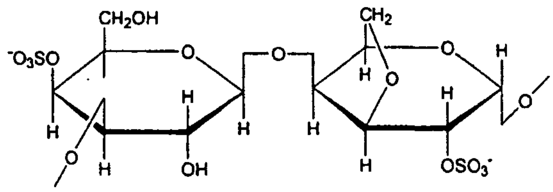

3)-β-D-Galactose-4-sulfat(1,4)α-D-3,6anhydrogalactose-(1.

$^4C_1$-Conformation

$^1C_4$-Conformation

eq - eq

Da die Anhydrogalactose in einer $^1C_4$-Conformation vorliegt, sind alle glykosidischen Bindungen diequatorial ausgerichtet. Einziger Unterschied zwischen Iota- und Kappa-Carrageenanen ist in der Veresterung mit Schwefelsäure zu sehen: Dabei ist das Kappa-Carrageenan ausschließlich an der Hydroxylgruppe in C-4-Stellung des Galactosylrestes verestert und weist einen Sulfatgehalt von ca. 25 bis 30 % auf. Im Iota-Carrageenan ist zusätzlich zur C-4-Position auch die Hydroxylgruppe in C-2-Stellung des Anhydrogalactosylrestes verestert, weshalb Iota-Carrageenane einen Sulfatanteil von 28 bis 35 % aufweisen.

Die diequatorial ausgerichteten glucosidischen Bindungen ermöglichen die Ausbildung der Molekülketten in Doppelhelix-Form, wobei sich diese geordnete Struktur in Gegenwart spezieller Kationen in Bindungszonen umwandeln können und so eine Gelbildung ermöglichen.

Das Iota-Carrageenan-Gel ist transparent, elastisch und relativ schwach ausgebildet, wobei das ziemlich lose ausgebildete Netzwerk leicht durch mechanische Kräfte zerstört werden kann. Es kehrt allerdings relativ rasch in seine Ausgangsstruktur zurück, sobald die mechanischen Einflüsse stoppen (Thixotropie).

Die Gelbildung bei den Kappa-Carrageenanen wird insbesondere durch Kaliumionen erhöht, wobei schon relativ niedrige Konzentrationen eine Gelbildung induzieren. Aufgrund ihrer geringen Ionengröße können sich die Kaliumionen in die Windungen der Polysaccharide einlagern und dort teilweise die Sulfatgruppen neutralisieren, worauf

sich die Doppelhelices zu Aggregaten zusammenlagern und in der Folge ein starkes Gel ausbilden können.

Die industrielle Gewinnung von Carrageenanen bedient sich im allgemeinen einer alkalischen Extraktion, denen kombinierte Trennungsschritte aus Zentrifugation und/oder Filtration nachgeschaltet sind. Die so erhaltene, relativ klare und Carrageenan enthaltende Lösung wird dann typischerweise mit einem Alkohol ausgefällt, gewaschen, ausgedrückt, getrocknet und abschließend vermahlen.

Die auf diese Weise erhaltenen elastischen Produkte besitzen spezielle rheologische Eigenschaften und können entweder alleine oder in Kombination mit anderen Hydrokolloiden wie z. B. Johannisbrotkernmehl in den unterschiedlichsten Anwendungsgebieten eingesetzt werden:

im Nahrungsmittelbereich unter anderem:

- zur Stabilisierung von Schokoladegetränken und Cremes
- in Nachspeisen, wie verdickte Milchprodukte, Kuchen, geschichtete Nachspeisen und Mousse

Fleisch- und Fischprodukte:

- zur Injektion in Schinken oder Geflügelfleisch
- zur Fettreduktion und als Fettersatz, bspw. in Hamburgern
- in Konserven in Kombination bspw. mit Johannisbrotkernmehl, auch für die Tierernährung.

in Instantprodukten:

- für Kuchenböden
- in Desserts, in Sahnetorten und Konditorcremes
- in Desserts auf Wasserbasis (bspw. Götterspeise) und Überzügen

in Eiscremes:

- meist in Kombination mit Guarkernmehl, Alginaten und Johannisbrotkernmehl

in Bereichen außerhalb der Ernährung:

- in Zahnpasta und Kosmetika
- in Luftverbesserern
- in Pharmazeutika

Insgesamt stellen Wasser enthaltende Gele allerdings die traditionelle Anwendung für Carrageenane dar. So werden Carrageenane bspw. in Aspik eingesetzt, aber auch als Gele in der Konservenindustrie und bei der Herstellung von Tierfutter sowie im Zusammenhang mit gekochten und geschnittenen Fleischprodukten (z. B. Aufschnitt), um diese vor Feuchtigkeitsverlusten zu schützen, das Kochergebnis zu verbessern, sie schnittfest zu machen und nicht zuletzt, um das Gaumengefühl zu verbessern.

Speziell bei den letztgenannten Fleisch- und.Wurstprodukten ist insbesondere das Wasserhaltevermögen von Bedeutung, wobei speziell eine ständige Verbesserung der Schnitteigenschaften im Vordergrund steht.

Aus dem Stand der Technik sind zahlreiche Publikationen und Patente bekannt, die sich mit der Extrusion von Hydrokolloiden befassen; allerdings nur wenige davon erwähnen Carrageenane.

So beschreibt die WO 99/47 249 mit dem Titel "Extruded hydrocolloid granules with improved wettability and a process for producing same" in diesem Zusammenhang ein für ein Guarprodukt verbessertes Dispergierverhalten und bessere Anfeuchtungseigenschaften in wässrigen Medien, falls es mit einem festen, nicht ionischen Benetzungsmittel trocken vermahlen und abschließend extrudiert wird.

Wedlock et al. ("Pregelatinised galactomannans - Properties and applications"; 1983) haben gefunden, dass Mischungen aus Guar und Johannisbrotkernmehl erhöhte Grundviskositäten in kaltem Wasser zeigen und gemeinsam mit Xanthan befähigt sind, ein Gel aufzubauen.

Mit dem US-Patent 4,859,484 sind "Processed starch-gum blends" geschützt, die für eine.Mischung aus einem Hydrokolloid und Stärke in Wasser Viskositätseigenschaften nachweisen, die denen des Rohmaterials entsprechen, wenn dieses in einem 10 bis 20 %igen Überschuss eingesetzt wird. Dabei werden diese verbesserten Eigenschaften dem innigen Mischen, wie es durch Extrudieren erfolgt, zugeschrieben.

Die DE-A-25 11 191 betrifft ein Airfresh-Gel, das ein Geliermittel mit Carrageenan, Johannisbrot-Gummi und wasserlöslichem Ammoniumsalz mit einem pH-Wert oberhalb etwa 5,0 als Bestandteilen enthält. Dieses Airfresh-Gel

weist angeblich keine Synärese und eine verbesserte Gelfestigkeit in Wasser auf. Es kann hergestellt werden, indem die Bestandteile des Geliermittels trocken vermischt, das trockene Gemisch in Wasser dispergiert, das dispergierte Geliermittel bis zur vollständigen Auflösung unter Rühren erhitzt, die wässrige Lösung des Geliermittels abgekühlt, die abgekühlte Lösung unter Rühren mit einem Luftbehandlungsmittel versetzt und dieses Gemisch auf eine Temperatur unterhalb etwa 37,8 °C abgekühlt wird, um eine Gelbildung zu erreichen.

WO 94/22921 beschreibt ein Verfahren zur Herstellung eines Carrageenan-haltigen Produkts. Das Verfahren umfasst das Umsetzen eines Carrageenan-haltigen Seegras Ausgangsmaterials in einer im wesentlichen homogenen Mischung eines Lösungsmittels, in dem das Carrageenan im wesentlichen unlöslich ist, und einer alkalischen wässrigen Phase. Das Verfahren umfasst weiter eine Scherbehandlung des umgesetzten und gewaschenen Seegrasmaterials. Ein durch das Verfahren erhältliches Carrageenan-haltiges Produkt ist ebenfalls offenbart.

WO 02/48199 (Priorität: 13. Dez. 2000 und 2. März 2001, Anmeldetag: 10. Dez. 2001, Veröffentlichungstag: 20. Juni 2002) offenbart ein Verfahren zur Herstellung von Carrageenan-Produkten aus prozessiertem Seegrasmaterial mit einem Feststoffgehalt von weniger als 25 Gew.-% unter Verwendung einer Scherbehandlung. Das Carrageenan-Produkt umfasst zumindest etwa 60 Gew.-% Carrageenan und zumindest etwa 2 Gew.-% säureunlösliches Material. Es wird als nützlicher Bestandteil in Nahrungsmitteln sowie Zahnpastaformulierungen, Kosmetika, Farben, Filmen und Verabreichungskapseln beschrieben.

Insgesamt können Makromoleküle hohen Scherkräften, einer hohen Temperatur und Bedingungen eines erhöhten Druckes, wie sie bspw. im Rahmen von Extrusionsvorgängen auftreten, nur sehr schwer widerstehen. Die als Folge solcher Einflüsse auftretende Abnahme des Molekulargewichts hat immer auch negative Auswirkungen auf die Moleküleigenschaften, wie z. B. die Gelstärke.

Ein- und Zweischneckenextruder enthalten als Geräteteil einen Extruderzylinder, in dem eine oder zwei Extruderschnecken rotieren. Der Extruder ist mit sektorweise untergliederten Heizsystemen bestückt, mit denen ein axiales Temperaturprofil dem Extruderzylinder aufgeprägt werden kann. Die Heiztemperaturen der Zylindersektoren sind einzeln geregelt und getrennt, entsprechend den verfahrenstechnischen Erfordernissen, vorgebbar. Das Zylinder-/Schneckensystem nimmt das Ausgangsgemisch auf, fördert es in Richtung Schneckenspitze, erwärmt es im Zuge von Wärmeübergangs- und Dissipationsvorgängen und baut im Medium den Massedruck auf. Durch das Zusammenwirken von Schnecke(n) und Zylinder werden die Ausgangsstoffe dispergiert, vermischt und durch das Einwirken von Scherkräften, Druck und Temperatur in ihrer Struktur verändert. Solche strukturellen Veränderungen äußern sich z.B. in einem Übergang vom Feststoffzustand zur Schmelze, in viskosen Fließeigenschaften des resultierenden Plastifikats und in einer Konsistenzveränderung (Texturierung). Nach dem Austritt aus dem Extruder geht das Extrudat durch forciertes Abkühlen wieder in den Festzustand über.

Die Extrusionstechnik wird insbesondere zur Herstellung sog. texturierter Nahrungsmittel wie Frühstücks-Cerealien und Snackprodukte eingesetzt, aber auch zur Herstellung von Instant-Produkten. Eine entsprechende Technik wird ebenfalls zur Erzeugung von Stärke-Produkten verwendet, die in kaltem Wasser löslich sind, aber auch für Stärke enthaltende Instant-Produkte.

Die Extrusionstechnik stellt darüber hinaus im Zusammenhang mit dem innigen Vermischen von zu extrudierenden Komponenten den gegenwärtigen Stand der Technik dar, wobei insbesondere Synergieeffekte erzielt werden, bspw. hinsichtlich einer erhöhten Viskosität der innig vermischten und schermodifizierten Komponenten, die im Vergleich zu den nur einfach abgemischten Ausgangsmaterialien deutlich erhöht ist.

Für die vorliegende Erfindung bestand somit aufgrund des geschilderten Standes der Technik die Aufgabe darin, ein Verfahren zur Herstellung einer Carrageenan enthaltende Zusammensetzung mit verbesserten gelbildenden Eigenschaften zur Verfügung zu stellen.

Gelöst wurde diese Aufgabe durch ein Verfahren zur Behandlung einer Carrageenan enthaltenden Zusammensetzung mit dem die gelbildenden Eigenschaften gesteigert werden, wobei das in Patentanspruch 1 spezifizierte Ausgangsmaterial zuerst vorzugsweise mit Wasser angefeuchtet wird, dann bei erhöhten Temperaturen und unter Bedingungen eines erhöhten Druckes intensiv geschert und vermischt wird, was vorzugsweise durch Scher- und Mischaggregate erfolgt, und wobei schließlich die Masse abgekühlt und vermahlen wird.

Die mit dem erfindungsgemäßen Verfahren hergestellte, Carrageenan enthaltende Zusammensetzung mit verbesserten gelbildenden Eigenschaften, kann in Formulierungen im Nahrungsmittelbereich und/oder im Pharmabereich, insbesondere in wasserhaltigen Gelen eingesetzt werden.

Entgegen den bisherigen Erfahrungen aus dem Stand der Technik war es vollkommen überraschend, dass sogar extreme Bedingungen wie erhöhte Massedrücke, Temperaturen sowie hohe Scherspannungen die Carrageenan-Strukturen nicht zerstören können und dass darüber hinaus die Carrageenan enthaltende Zusammensetzung entsprechend der vorliegenden Erfindung sogar eine erhöhte Gelstärke, eine verminderte Synerese des Gels, ein beschleunigtes Gelbildungsvermögen und auch eine signifikant verbesserte Dispergierbarkeit der pulverförmigen Zusammensetzung in Lösungen aufweist. Mit den erfindungsgemäß hergestellten Carrageenan enthaltenden Zusammensetzungen können auch Mischungen mit anderen Polymeren erhalten werden, deren Eigenschaften die vergleichbarer Pulver/Pulvermischungen deutlich übertreffen. Dies alles war in dieser Ausprägung nicht zu erwarten.

Grundsätzlich kann für die vorliegende Erfindung als Rohmaterial jegliches geeignete, Carrageenan enthaltende Material herangezogen werden, solange es mindestens 60 Gew.-% κ- Carrageenan enthält.

Gleichermaßen hat es sich als vorteilhaft erwiesen, wenn im Zusammenhang mit der vorliegenden Erfindung die Synerese der Carrageenan enthaltenden Zusammensetzung ≤ 2,0 Gew.-% ist und/oder die Zusammensetzung eine verbesserte Bruchfestigkeit aufweist, die im Vergleich zum Carrageenan enthaltenden Ausgangsmaterial um mindestens 40 % erhöht ist.

Vorzuziehen ist ebenfalls eine Zusammensetzung, deren Carrageenan-Anteil mindestens 60 Gew.-% beträgt.

Eine spezielle Variante der vorliegenden Erfindung sieht eine Zusammensetzung vor, die neben der Carrageenan-Komponente zusätzlich eine Stärke und/oder ein Hydrokolloid und/oder ein Protein enthält, die auch jeweils einer Vorbehandlung unterzogen worden sein können.

Vorzugsweise stammt dabei die verwendete Stärke aus Getreide, Mais, Kartoffeln, Weizen, Tapioka, Reis oder Mischungen daraus.

Ebenso als bevorzugt anzusehen ist, wenn als Hydrokolloid-Komponente eines der Reihe Guar, Johannisbrotkernmehl, Karaya, Konjac, Cellulose, Celluloseether, mikrokristalline Cellulose, Xanthan, Pectin, Alginate, Agar oder wiederum beliebige Mischungen daraus enthalten sind.

Die dritte ebenfalls bevorzugte zusätzliche Komponente, das Protein, kann ganz allgemein im Rahmen der vorliegender Erfindung pflanzlichen oder tierischen Ursprungs sein, es kann aus Leguminosen stammen oder Protein aus Soja sein, das sich besonders gut eignet.

Insgesamt gesehen, ist der Anteil der zusätzlichen Komponenten an der erfindungsgemäß hergestellten Zusammensetzung nicht kritisch, doch wird ein Gesamtanteil empfohlen, der nicht höher als 50 Gew.-%, bezogen auf das Gesamtgewicht ist, wobei ein Gehalt als besonders geeignet anzusehen ist, der zwischen 3 und 40 Gew.-% liegt.

Schließlich wird im Rahmen der vorliegenden Erfindung eine Zusammensetzung bevorzugt, bei der es sich um ein Produkt handelt, das einer Behandlung unter großen Scherkräften und einem hohen Druck unterworfen worden ist, wie es bspw. beim Extrudieren mit Ein- oder Zwei-Schnecken-Extrudern der Fall ist.

Die erfindungsgemäß hergestelle Carrageenan enthaltende Zusammensetzung weist insbesondere im Hinblick auf deren Anwendung im Nahrungsmittelbereich verbesserte Eigenschaften, wie eine verbesserte Gelstärke, eine verbesserte Wechselwirkung mit anderen (Bio-)Polymeren, eine verbesserte Gelsynerese sowie eine deutlich verbesserte Dispergierfähigkeit in Pulverform auf und kann zudem völlig überraschend auch durch einen Extrusionsprozess erhalten werden, bei dem bekanntermaßen hohe Scherkräfte, ein hoher Druck und hohe Temperaturen im masseführenden Verfahrensteil realisiert sind.

Aus diesem Grund berücksichtigt die vorliegende Erfindung auch ein Verfahren zur Verbesserung der gelbildenden Eigenschaften einer Carrageenan enthaltenden Zusammensetzung, bei dem in einem ersten Verfahrensschritt das Rohmaterial angefeuchtet wird, was vorzugsweise mit Wasser geschieht, dann dieses Gemenge bei erhöhten Temperaturen und unter Bedingungen eines erhöhten Druckes intensiv geschert und vermischt wird, wobei hohe Schubspannungen auftreten und was vorzugsweise durch Scher- und Mischaggregate wie z.B. Ein-und Zwei-Schnecken-Extruder erfolgt, und bei dem schließlich die so erhaltene Masse abgekühlt und vermahlen wird. Generell werden bei dieser Vorgehensweise die Eigenschaften der Zusammensetzung gemäß Erfindung durch die Kontrolle der einzelnen Prozessbedingungen beeinflusst, worunter insbesondere der Feuchtegehalt des zu verarbeitenden Materials, das Temperaturprofil des Extruders sowie die Einspeisungsrate des Ausgangsmaterials und die Schneckendrehzahl des Kneters (Extruders) verstanden werden.

Das Ausgangsmaterial enthält mindestens mindestens 60 Gew.-% an κ-Carrageenanen.

Typischerweise wird der Feuchtigkeitsgehalt des Ausgangsmaterials vor dessen Zugabe in das Aufbereitungsaggregat durch Zugabe von Wasser eingestellt. Da im Rahmen der vorliegenden Erfindung die Verarbeitung des Ausgangsmaterials durch einen Extruder und hier insbesondere durch einen Zwei-Schnecken-Extruder erfolgen sollte, wird es als vorteilhaft angesehen, das Wasser in den ersten Abschnitt des Extrusionssystems einzuspeisen.

Generell kann im Rahmen der vorliegenden Erfindung ein Feuchtigkeitsgehalt des Ausgangsmaterials als bevorzugt angesehen werden, der zwischen 50 und 95 Gew.-%, bezogen auf das Gesamtgewicht, liegt und insbesondere zwischen 60 bis 85 Gew.-%.

Sollten mit dem vorliegenden Verfahren Mischungen aus Carrageenan und anderen Komponenten, wie bspw. Sojaproteine oder Konjac verarbeitet werden, können die entsprechenden Mischungen völlig problemlos hergestellt werden, bevor sie dem Extruder zugeführt werden.

Die eigentliche Vermischung des Ausgangsmaterials, das erfindungsgemäß zusätzlich als weitere Komponenten eine Stärke und/oder ein Hydrokolloid und/oder ein Protein enthalten kann, wird vorzugsweise bei Temperaturen zwischen 30 und 130 °C durchgeführt und folgt dabei besonders bevorzugt einem in Förderrichtung ansteigenden Temperaturprofil; als ebenfalls bevorzugt sind Massedrücke ≥ 2 bar und insbesondere solche zwischen 4 und 40 bar anzusehen. Dabei können Drücke bis zu 60 oder sogar 80 bar ebenfalls geeignet sein, falls die zu erzielenden Produktqualitäten dadurch keinen negativen Einfluss erleiden.

Typischerweise wird das beanspruchte Verfahren zur Behandlung und/oder Verarbeitung eines Carrageenan

enthaltenden Ausgangsmaterials mit Hilfe eines Extruders in der Weise durchgeführt, dass das Carrageenan enthaltende Material oder eine entsprechende Ausgangsmischung, die überwiegend Carrageenan enthält, in einem diskontinuierlich arbeitenden Fluidmischer für 5 Minuten trocken abgemischt wird, dann bei Raumtemperatur (ca. 20 °C) 30 bis 70 Gew.-% destilliertes Wasser zugesetzt werden, daraufhin weitere fünf Minuten gerührt wird und schließlich für ca. eine Stunde die so erhaltene Mischung bei Raumtemperatur in dem Fluidmischer ruhen gelassen wird, bevor sie dem Extrusionssystem zugeführt wird.

Dies erfolgt üblicherweise mit Hilfe eines gravimetrisch arbeitenden Schneckendosiersystems, wobei im Bedarfsfall weitere Flüssigkeit in eine der ersten Aufheizzonen des Extruders zugeführt werden kann. Grundsätzlich beeinflussen die Verfahrensparameter wie Flüssigkeitsgehalt, Temperatur und Scherkräfte das Ergebnis des Extrusions- bzw. Aufbereitungsvorganges.

Das Fördern des Carrageenan-haltigen Materials im Extrudersystem wird normalerweise von einem Temperaturanstieg auf 30 bis 60 °C begleitet, wobei das Mischen und Durchkneten bei 50 bis 130 °C erfolgen sollte. Als Schneckenumfangsgeschwindigkeiten haben sich Werte zwischen 0,07 und 0,20 $m \cdot sec^{-1}$ besonders bewährt, wobei diese Umfangsgeschwindigkeiten einem Extruder mit 25 mm Schneckendurchmesser entsprechen. Zu empfehlen sind auch Schneckendrehzahlen zwischen 60 und 150 $min^{-1}$.

Der Gesamtwassergehalt, der sich aus den Einzelgehalten aller im Extruder verarbeiteten Materialien, inklusive des zugesetzten Wassers sowie des Feuchtegehaltes des Ausgangsmaterials und des Anfeuchtungsvorganges im Fluidmischer zusammensetzt, sollte zwischen 50 und 95 % des Gesamtgewichts betragen.

Die Durchführung des vorgeschlagenen Verfahrens ist auf keinen speziellen Extrudertyp beschränkt, doch ist - wie bereits erwähnt - ein Zwei-Schnecken-Extruder als bevorzugt anzusehen, da er einen besseren Wärmeübergang gewährleistet und mit diesem Typ auch eine bessere Durchmischung und Strukturierung der Materialien zu erzielen ist.

Das Schneckengewinde baut im Zusammenspiel mit dem Extruderzylinder den Massedruck auf, der zum Überwinden des Extrusionswerkzeugwiderstandes und zum Überfahren förderinaktiver Schneckenelemente (Scherteile, Knetblöcke, distributive Mischteile) erforderlich ist. Anschließend werden die Strangextrudate im hydratisierten Zustand abgekühlt und mit Hilfe einer Schneidmühle in kleine Stücke geschnitten, in einem Vakuumsiebtrockner getrocknet und schließlich vermahlen.

Insgesamt ist darauf zu achten, dass das Trocknen und Vermahlen des Endproduktes unter solchen Bedingungen erfolgt, dass das Endprodukt hinsichtlich seiner Eigenschaften keinerlei Beeinträchtigung erfährt.

Aufgrund seiner überraschend vielfältigen und guten Produkteigenschaften, die insbesondere im Rahmen der vorliegenden Erfindung durch das ebenfalls beanspruchte Verfahren erzielt werden und die insbesondere die gelbildenden Eigenschaften und eine deutlich erniedrigte Synerese betreffen, kann das bevorzugt durch Extrudieren erhaltene Produkt in zahlreichen Anwendungsbereichen, in denen eine verbesserte Gelbildung erwünscht ist, eingesetzt werden, was insbesondere im fleischverarbeitenden Gewerbe der Fall ist.

Vor allem auch deshalb berücksichtigt die vorliegende Erfindung die Verwendung der Carrageenan enthaltenden Zusammensetzung mit verbesserten gelbildenden Eigenschaften, wobei die Zusammensetzung als Formulierung im Bereich der Nahrungsmittel und/oder im pharmazeutischen Bereich und hier insbesondere in wasserhaltigen Gelen verwendet wird. Dabei erfolgen die einschlägigen Anwendungen vorzugsweise als Texturierungsmittel, als viskositätserhöhendes Mittel (Viscosifier), als Gel bildendes Mittel, als Filmbildner und rheologisches Hilfsmittel sowie als Stabilisierungsmittel.

Insgesamt stellt die vorliegende Erfindung ein neues Verfahren zur Herstellung einer Carrageenan enthaltenden Zusammensetzung mit einer verbesserten Gelstärke, einer deutlich verminderten Synerese und einem beschleunigten Gelbildungsvermögen zur Verfügung. Des Weiteren zeigt die beanspruchte Zusammensetzung in Pulverform eine verbesserte Dispergierbarkeit in Lösungen, wobei alle diese vorteilhaften Eigenschaften des Produktes nicht zuletzt durch das ebenfalls beanspruchte Verfahren zur Verbesserung der gelbildenden Eigenschaften erzielt werden.

Die nachfolgenden Beispiele verdeutlichen diese völlig überraschend aufgetretenen Produktmerkmale der Zusammensetzung, die durch das beanspruchte Verfahren erhalten werden können.

<u>Beispiele</u>

Für die nachfolgenden Beispiele wurde ein Zwei-Schnecken-Extruder, Typ ZE25-HD=48, der Fa. Berstorff verwendet, der mit einem gravimetrischen Dosiersystem (K-Tron oder AG Typ T20) gekoppelt war. Die jeweils benötigten Flüssigkeitsmengen (destilliertes Wasser) wurden mit Hilfe einer Membranpumpe (Prominent AKTRIEB G/4-W) in den dritten Zylinderschuss des Extruders eingespeist.

Sämtliches Ausgangsmaterial wurde entweder trocken vorgemischt oder in einem Fluidmischer, Typ Günther Papenmeier TGHK-8, abgemischt. Die Anfeuchtung der jeweiligen Mischungen mit destilliertem Wasser erfolgte mit eine Injektionsnadel in den Fluidmischer.

Falls erforderlich wurden die den Extruder verlassenden Produktstränge mit Hilfe eines Stranggranulators (Fa. Scheer) in Pellets von ca. 4 mm Länge geschnitten.

Das den Extruder verlassende Material wurde grundsätzlich 24 Stunden lang in einem Vakuumsiebtrockner bei 55 °C Warmluft getrocknet (Heraeus-electronic).

Die Eigenschaften der so erhaltenen Produkte wurde über deren Vermögen, in Salzwasser Gele auszubilden, charakterisiert. Dazu wurden zuerst 2,5 Gew.-% Natriumchlorid und Natriumtripolyphosphat in destilliertes Wasser gegeben und anschließend 5 Gew.-% des jeweiligen Produktes.

Mit Hilfe eines Druckmessers (bspw. TAXT2 Rheometer) wurden die Gelstärken und die Deformationseigenschaften der Gele (Bruchpunkt, Elastizität und Widerstandskraft) gemessen.

Die Bruchfestigkeit wurde mittels eines Verdichtungstests bestimmt, bei dem die Gelscheibe mit einem Durchmesser von 12,7 mm in einer Kristallisationsschale mit einem Penetrationsgeschwindigkeit von 0,5 mm/sec belastet wird. Als Ausgangsmaterial für das Gel wurden 1,5 Gew.-% eines Carrageenan-Pulvers in einer Salzlösung 16 Stunden lang bei 10°C gelagert. Im Anschluss daran erfolgte die Messung. Als rheologische Parameter dienten dabei die Festigkeit in 2 und 4 mm Tiefe der Gelscheibe sowie der Brechpunkt. Bei diesem Verdichtungstest dringt der Stempel je nach ausgebildeter Gelstärke unter Überwindung der Oberflächenkraft in die Probe ein, wobei in Abhängigkeit von der Gelstärke bzw. Bruchfestigkeit eine bestimmte Kraft aufgewendet werden muss, die in 2 bzw. 4 mm Geltiefe als "g" (1 N = 102 g) bestimmt wird und die somit die Bruchfestigkeit bzw. Gelstärke wiedergibt.

Die Synerese wurde jeweils dadurch bestimmt, dass die Gele drei Tage lang in einer Kristallisationsschale im Kühlschrank aufbewahrt wurden. Das freigesetzte Wasser wurde anschließend mit einem Löschpapier aufgesogen, um die Gele zu trocknen, und die Synerese entsprechend der folgenden Formel berechnet:

$$S = \frac{w_1 - w_2}{w_1} \times 100$$

wobei:

$w_1$ = Gewicht des feuchten Gels,
$w_2$ = Gewicht des sorgfältig mit einem Löschpapier getrockneten Gels

Als Ergebnis wurden die Viskositäten gegen das Temperaturprofil der jeweiligen Beispiele durch die Darstellung von sogenannten "Brabender-Kurven" aufgenommen.

Zusätzlich wurden Veränderungen an den Partikeln der Mischungen mikroskopisch und mit speziellen Färbemethoden bestimmt, wobei zwischen extrudierten und nicht extrudierten Abmischungen signifikante Unterschiede festzustellen waren:

Bei Anfärbung von traditionell erhaltenem Carrageenan zeigten sich purpurfarbene Teilchen von länglicher Ausdehnung, wobei Sojaproteine hellblau gefärbt und von eher rundlicher Form sind.

Mit Lugols-Lösung sind die Carrageenan-Bestandteile transparent, wohingegen die Konjacteilchen purpur/rot gefärbt werden.
Nach dem Extrusionsprozess können die verschiedenen Bestandteile nicht mehr klar unterschieden werden.

<u>Beispiel 1</u>

*Ausgangsmaterial* : kappa-Carrageenan aus Eucheuma cottonii. Zugabe von 40 Gew.-% destilliertem Wasser vor dem Extrudiervorgang.

*Extrusionsbedingungen:*

- Zugabe von Flüssigkeit in Zylinderschuss 3; Rate: 0,75 kg/h
- Schneckendrehzahl: n = 100 min $^{-1}$
- Dosierrate: 2 kg/h
- Temperaturprofil:

| T1 | T2 | T3 | T4 | T5 | T6 | T7 | T8 | T9 | T10 |
|---|---|---|---|---|---|---|---|---|---|
| 35 | 40 | 70 | 90 | 90 | 90 | 90 | 90 | 80 | 80 |

- Druck am Werkzeugeinlauf: 16 bar
- Gesamtfeuchtegehalt des Endprodukts: 60 Gew.-%
- Durchsatz: 2,25 kg/h

*Ergebnis:*

| | Synerese (Gew.-%) | Bruchfestigkeit (g) |
|---|---|---|
| Ausgangsmaterial | 3,8 | 476 |
| extrudiertes Produkt | 2,9 | 650 |

Das Ergebnis zeigt eine signifikante Abnahme der Synerese des mit einem extrudierten Carrageenan gemäß Erfindung gebildeten Gels.

Beispiel 2

*Ausgangsmaterial :* kappa-Carrageenan aus Eucheuma cottonii. Zugabe von 60 Gew.-% destilliertem Wasser vor dem Extrudiervorgang

*Extrusionsbedingungen:*

- In Zylinderschuss 3 wurde zusätzliche Flüssigkeit zugesetzt, Rate: 2,5 kg/h
- Schneckendrehzahl: n = 100 $min^{-1}$
- Dosierrate: 1,5 kg/h
- Temperaturprofil:

| T1 | T2 | T3 | T4 | T5 | T6 | T7 | T8 | T9 | T10 |
|---|---|---|---|---|---|---|---|---|---|
| 35 | 40 | 90 | 130 | 130 | 130 | 130 | 130 | 120 | 120 |

- Druck am Werkzeugeinlauf: 3 bar
- Gesamtfeuchtegehalt des Endprodukts: 85 Gew.-%
- Durchsatz: 4 kg/h

*Ergebnis*:

| | Synerese (Gew.-%) | Dehnfähigkeit (mm) | Bruchfestigkeit (g) |
|---|---|---|---|
| Ausgangsmaterial | 3,8 | 4,8 | 476 |
| extrudiertes Produkt | 2,7 | 4,8 | 710 |

Die Ergebnisse zeigen eine signifikante Zunahme Gel-Bruchfestigkeit bei den mit extrudiertem Carrageenan gebildeten Gelen gemäß Erfindung.

Beispiel 3

*Ausgangsmaterial*: Mischung eines Kappa-Carrageenan aus Eucheuma cottonii und einem Sojaprotein-Isolat (F940 von Dupont)
Vor dem Extrusionsprozess wurden 80 Gew.-% Carrageenan mit 20 Gew.-% des Sojaproteins trocken abgemischt und dann 60 % destilliertes Wasser zugesetzt

*Extrusionsbedingungen:*

- Schneckendrehzahl: n = 100 $min^{-1}$
- Dosierrate: 2 kg/h
- Temperaturprofil:

| T1 | T2 | T3 | T4 | T5 | T6 | T7 | T8 | T9 | T10 |
|---|---|---|---|---|---|---|---|---|---|
| 35 | 35 | 55 | 70 | 100 | 110 | 110 | 100 | 90 | 90 |

- Druck am Werkzeugeinlauf: 18 bar
- Gesamtfeuchtegehalt des Endprodukts: 60 Gew.-%
- Durchsatz: 2 kg/h

*Ergebnis:*

| | Dehnfähigkeit (mm) | Bruchfestigkeit (g) | Synerese (Gew.-%) |
|---|---|---|---|
| Ausgangsmaterial | 2,9 | 270 | 2 |
| extrudiertes Produkt | 2,7 | 440 | 1,2 - 1,7 |

Die Ergebnisse belegen deutlich, dass durch den Extrudiervorgang die sonst üblichen negativen Auswirkungen des Sojaproteins auf die Gelfestigkeit abgeschwächt wurden und gleichzeitig eine Abnahme der Synerese sowie eine signifikante Zunahme der Gelstärke (Bruchfestigkeit) bei den Carrageenan und Protein enthaltenden Gelen gemäß Erfindung festzustellen war.

<u>Beispiel 4</u>

*Ausgangsmaterial:* Mischung aus kappa-Carrageenan aus Eucheuma cottonii und Konjacmehl (Hydrokolloid) 97 Gew.-% Carrageenan wurden mit 3 Gew.-% Konjacmehl vor dem Extrudiervorgang trocken abgemischt und anschließend mit 20 Gew.-% destilliertem Wasser versetzt

*Extrusionsbedingungen:*

- In Zylinderschuss 3 wurde zusätzlich Flüssigkeit zugesetzt; Rate: 3 kg/h
- Schneckendrehzahl: n = 100 $min^{-1}$
- Dosierrate: 1 kg/h
- Temperaturprofil:

| T1 | T2 | T3 | T4 | T5 | T6 | T7 | T8 | T9 | T10 |
|---|---|---|---|---|---|---|---|---|---|
| 35 | 35 | 50 | 70 | 80 | 80 | 70 | 60 | 60 | 50 |

- Druck am Werkzeugeinlauf: 4 bar
- Gesamtfeuchtegehalt des Endprodukts: 80 Gew.-%
- Durchsatz: 4 kg/h

*Ergebnis:*

| | Dehnfähigkeit (mm) | Bruchfestigkeit (g) | Synerese (Gew.-%) |
|---|---|---|---|
| Ausgangsmaterial | 3,4 | 515 | 1,4 |

(fortgesetzt)

| | Dehnfähigkeit (mm) | Bruchfestigkeit (g) | Synerese (Gew.-%) |
|---|---|---|---|
| extrudiertes Produkt | 3,8 | 885 | 1,0 |

Die Ergebnisse zeigen, dass der positive Einfluss von Konjac auf die Carrageenan-Gel-Eigenschaften sich durch den Extrusionsprozess weiter verbessern lassen und dass bei dem Carrageenan und Konjac enthaltenden Gel gemäß Erfindung eine Abnahme der Synerese sowie ein signifikanter Anstieg der Gelstärke zu beobachten sind.

Beispiel 5

*Ausgangsmaterial:* Mischung aus kappa-Carrageenan aus Eucheuma cottonii und einem Sojaprotein-Isolat (F940 von Dupont) 80 Gew.-% Carrageenan wurden mit 20 Gew.-% des Sojaproteins vor dem Extrudiervorgang trocken abgemischt und anschließend 60 Gew.-% destilliertes Wasser zugesetzt

*Extrusionsbedingungen:*

- In Zylinderschuss 3 wurde zusätzliche Flüssigkeit zugesetzt;
Rate: 3,33 kg/h
- Schneckendrehzahl: n = 100 $min^{-1}$
- Dosierrate: 2 kg/h
- Temperaturprofil:

| T1 | T2 | T3 | T4 | T5 | T6 | T7 | T8 | T9 | T10 |
|---|---|---|---|---|---|---|---|---|---|
| 35 | 35 | 55 | 70 | 100 | 110 | 110 | 100 | 90 | 90 |

- Druck am Werkzeugeinlauf: 2 bar
- Gesamtfeuchtegehalt des Endprodukts: 85 Gew.-%
- Durchsatz: 5,33 kg/h

*Ergebnis:*

| | Synerese (Gew.-%) | Bruchfestigkeit (g) | Gelbildungstemperatur (°C) |
|---|---|---|---|
| Ausgangsmaterial | 2,1 | 290 | 30 |
| extrudiertes Produkt | 1,3 | 490 | 38 |

Beim extrudierten Produkt gemäß Erfindung ist der Gelbildungsschritt bei einer gegenüber dem Ausgangsmaterial um 8 °C erhöhten Temperatur festzustellen.

Beispiel 6

*Ausgangsmaterial:* Mischung aus kappa-Carrageenan aus Eucheuma cottonii und 1) einem Sojaprotein-Isolat (20 Gew.-%) oder 2) Konjacmehl (30 Gew.-%)

*Ergebnis:*

| | Mikroskopische Beobachtung |
|---|---|
| Ausgangsmaterial | zwei voneinander getrennte Bestandteile |

(fortgesetzt)

| | Mikroskopische Beobachtung |
|---|---|
| extrudierte Produkte 1) bzw. 2) | die Sojateilchen bzw. die Konjacteilchen sind in den Carrageenanteilchen eingeschlossen |

Insgesamt war festzustellen, dass bei den erfindungsgemäßen Zusammensetzungen im Fall 1) die Konjacteilchen in den Carrageenanteilchen eingeschlossen waren, wobei dann die Konjacteilchen auch sehr viel kleiner als die des Ausgangsmaterials waren. Im Fall 2) konnten die Sojaproteinanteile mikroskopisch nicht mehr festgestellt werden; sie schienen vollständig von den Carrageenananteilen absorbiert worden zu sein.

## Patentansprüche

**1.** Verfahren zur Herstellung einer Carrageenan enthaltenden Zusammensetzung aus einem traditionell aufgereinigten Carrageenan-Extrakt, das zu mindestens 60 Gew.-% aus κ-Carrageenan besteht, **dadurch gekennzeichnet, dass** das Ausgangsmaterial zuerst angefeuchtet wird, dann bei erhöhten Temperaturen und unter Bedingungen eines erhöhten Drucks intensiv geschert und vermischt wird, und schließlich die erhaltene Masse abgekühlt und vermahlen wird.

**2.** Verfahren nach Anspruch 1, **dadurch gekennzeichnet, dass** das Ausgangsmaterial mit Wasser angefeuchtet wird.

**3.** Verfahren nach einem der Ansprüche 1 oder 2, **dadurch gekennzeichnet, dass** das Ausgangsmaterial auf einen Feuchtigkeitsgehalt zwischen 50 und 95 Gew.-% und insbesondere 60 bis 85 Gew.-%, bezogen auf das Gesamtgewicht, angefeuchtet wird.

**4.** Verfahren nach einem der Ansprüche 1 bis 3, **dadurch gekennzeichnet, dass** das Ausgangsmaterial zusätzlich eine Stärke und/oder ein Hydrokolloid und/oder ein Protein enthält.

**5.** Verfahren nach einem der Ansprüche 1 bis 4, **dadurch gekennzeichnet, dass** das Scheren und Vermischen bei Temperaturen zwischen 30 und 130 °C vorgenommen wird.

**6.** Verfahren nach Anspruch 5, **dadurch gekennzeichnet, dass** das Scheren und Vermischen einem in Förderrichtung zunehmenden Temperaturprofil folgt.

**7.** Verfahren nach einem der Ansprüche 1 bis 6, **dadurch gekennzeichnet, dass** der Massedruck ≥ 2 bar und vorzugsweise zwischen 4 und 40 bar beträgt.

**8.** Verfahren nach einem der Ansprüche 1 bis 7, **dadurch gekennzeichnet, dass** das Scheren und Mischen mit Hilfe eines Extruders und vorzugsweise mit Hilfe eines Zwei-Schnecken-Extruders durchgeführt wird.

## Claims

**1.** Method for producing a composition containing carrageenan from a traditionally purified carrageenan extract composed of at least 60 % by weight.of k-carrageenan, **characterised in that** the starting material is firstly moistened, then intensively sheared and mixed at elevated temperatures and under conditions of elevated pressure and finally the mass obtained is cooled down and ground up.

**2.** Method according to claim 1, **characterised in that** the starting material is moistened with water.

**3.** Method according to any of claims 1 or 2, **characterised in that** the starting material is moistened to a moisture content of between 50 and 95 % by weight and in particular of 60 to 85 % by weight with reference to the total weight.

**4.** Method according to any of claims 1 to 3, **characterised in that** the starting material additionally contains a starch and/or a hydrocolloid and/or a protein.

5. Method according to any of claims 1 to 4, **characterised in that** the shearing and mixing is carried out a temperatures between 30 and 130 °C.

6. Method according to claim 5, **characterised in that** the shearing and mixing follows a rising temperature profile in the transport direction.

7. Method according to any of claims 1 to 6, **characterised in that** the mass pressure ≥ 2 bar and is preferably between 4 and 40 bar.

8. Method according to any of claims 1 to 7, **characterised in that** the shearing and mixing is carried out with the aid of an extruder and preferably with the aid of a twin screw extruder.

**Revendications**

1. Procédé de préparation d'une composition contenant du carraghénane, à partir d'un extrait de carraghénane épuré de façon classique, composé d'au moins 60 % en poids de κ-carraghénane, **caractérisé en ce que** le matériau initial est d'abord humidifié, ensuite, à des températures élevées et dans des conditions de pression élevées, il est soumis à un cisaillement intense et est mélangé et, enfin, la masse obtenue est refroidie et broyée.

2. Procédé selon la revendication 1, **caractérisé en ce que** le matériau initial est humidifié à l'eau.

3. Procédé selon l'une des revendications 1 ou 2, **caractérisé en ce que** le matériau initial est humidifié à une teneur en humidité dans la fourchette entre 50 et 95 % en poids et, en particulier, entre 60 et 85 % en poids, en se référant au poids global.

4. Procédé selon l'une des revendications 1 à 3, **caractérisé en ce que** le matériau initial contient en plus un amidon et/ou un hydrocolloide et/ou une protéine.

5. Procédé selon l'une des revendications 1 à 4, **caractérisé en ce que** le cisaillement et le mélange sont effectués à des températures comprises entre 30 et 130°C.

6. Procédé selon la revendication 5, **caractérisé en ce que** le cisaillement et le mélange suivent un profil de température allant en augmentant, lorsqu'on évolue dans la direction de transport.

7. Procédé selon l'une des revendications 1 à 6, **caractérisé en ce que** la pression massique ≥ 2 bar et, de préférence, est comprise dans la fourchette entre 4 et 40 bar.

8. Procédé selon l'une des revendications 1 à 7, **caractérisé en ce** le cisaillement et le mélange sont effectués à l'aide d'une extrudeuse et, de préférence, à l'aide d'une extrudeuse à vis double.